Europäisches Patentamt

(19) European Patent Office

Office européen des brevets

(11) Numéro de publication: **0 336 788 B1**

(12) **FASCICULE DE BREVET EUROPEEN**

(45) Date de publication du fascicule du brevet: **30.01.91**

(51) Int. Cl.⁵: **B 60 K 15/00**

(21) Numéro de dépôt: **89400594.1**

(22) Date de dépôt: **03.03.89**

(54) **Clapet de sécurité pour circuit de ventilation d'un réservoir de carburant pour véhicules automobiles.**

(30) Priorité: **08.03.88 FR 8802950**

(43) Date de publication de la demande:
**11.10.89 Bulletin 89/41**

(45) Mention de la délivrance du brevet:
**30.01.91 Bulletin 91/05**

(84) Etats contractants désignés:
**DE ES GB IT**

(56) Documents cités:
**FR-A-2 376 353**
**US-A-1 795 581**
**US-A-2 150 714**
**US-A-3 765 435**

(73) Titulaire: **PAUL JOURNEE S.A.**
**1, Bd Charles de Gaulle**
**F-92707 Colombes Cedex (FR)**

(72) Inventeur: **Percebois, Serge**
**23 Résidence Bellevue**
**F-60240 Chaumont-en-Vexin (FR)**
Inventeur: **Romanek, Christian**
**57, rue de Paris**
**F-60430 Noailles (FR)**

(74) Mandataire: **Lemaire, Marc**
**VALEO Service Propriété Industrielle 30, rue**
**Blanqui**
**F-93406 Saint-Ouen Cédex (FR)**

Courier Press, Leamington Spa, England.

## Description

L'invention concerne un clapet de sécurité pour circuit de ventilation d'un réservoir de carburant pour véhicules automobiles.

Dans les véhicules automobiles modernes, un circuit de ventilation forcée est en général adjoint au réservoir de carburant pour entraîner les vapeurs de carburant et les séparer afin d'interdire leur libération dans l'air ambiant.

De tels circuits de ventilation doivent permettre des débits gazeux très élevés, par exemple supérieurs à 2 000 litres/heure, tout en interdisant au carburant de sortir accidentellement du réservoir.

La sortie du carburant peut être provoquée par des coups de bélier dans le réservoir, ou encore, bien entendu, par un accident du véhicule provoquant une inclinaison excessive (véhicule couché sur le côté par exemple) ou un renversement complet.

Il est connu par US-A-1 795 581 un clapet de sécurité comportant un boîtier ayant une entrée, une sortie et un organe d'obturation apte à fermer ladite sortie sous l'action d'un flotteur solidaire de cet organe.

Dans ce type de clapet, une certaine quantité de carburant est nécessaire pour pouvoir actionner le flotteur et en cas d'inclinaison excessive du véhicule telle que mentionnée plus haut comme celle couchée sur le côté, le carburant peut s'écouler librement de l'entrée du clapet vers la sortie du clapet sans pour cela agir directement sur le flotteur.

La présente invention vise à fournir un clapet de sécurité assurant une telle double fonction de manière sûre et simple et cela quelle que soit la position du véhicule.

A cet effet, l'invention propose un clapet de sécurité pour circuit de ventilation d'un réservoir de carburant pour véhicules automobiles comportant un boîtier ayant une entrée, une sortie, un organe d'obturation apte à fermer ladite sortie et un flotteur, caractérisé en ce qu'il comporte des moyens élastiques de tarage aptes à commander ledit organe d'obturation dans le sens de l'obturation de la sortie pour une inclinaison du boîtier supérieure à une valeur prédéterminée.

L'invention sera bien comprise à la lecture de la description suivante faite en se référant aux dessins annexés dans lesquels:

la figure 1 est une vue schématique en coupe d'un clapet selon un premier exemple de réalisation de l'invention.

la figure 2 est analogue à la figure 1 pour un second exemple de réalisation;

la figure 3 est une demi-vue en coupe selon la flèche A de la figure 2;

la figure 4 est une demi-vue en coupe selon la flèche B de la figure 3;

les figures 5 à 8 sont des coupes partielles d'un clapet selon la figure 1, pour diverses formes de réalisation du flotteur;

la figure 9 est analogue à la figure 1 pour une autre variante;

la figure 10 représente une autre variante du clapet de la figure 1;

les figures 11 à 13 sont des coupes à travers des clapets selon diverses variantes de l'invention et

la figure 14 est une vue en coupe selon la ligne C de la figure 13.

Le clapet selon l'invention comprend un boîtier 1 ayant une entrée 2 et une sortie 3.

L'entrée 2 est reliée au réservoir et la sortie 3 au circuit de ventilation.

Un flotteur est logé dans le boîtier 1 en regard de l'entrée 2 et est lié à un organe d'obturation 5 de la sortie 3.

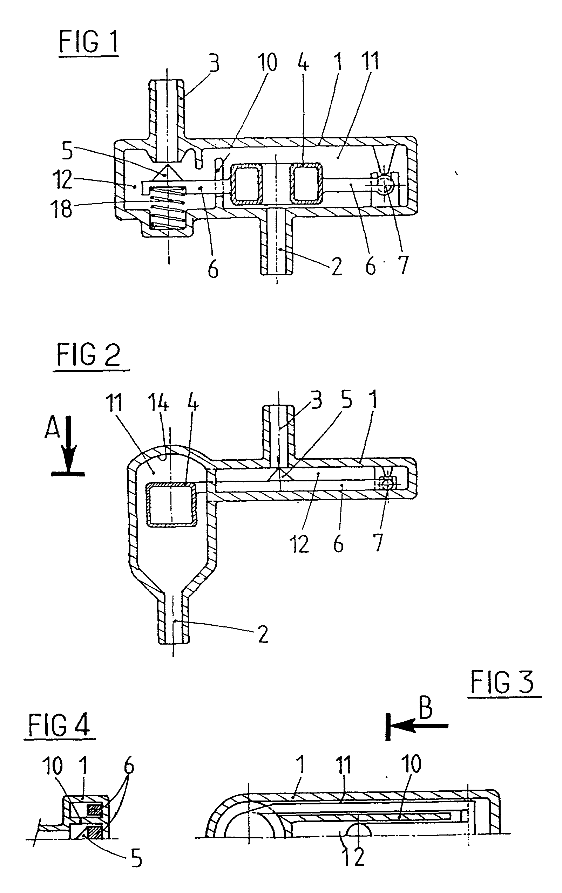

Dans la forme de réalisation de la figure 1, le flotteur 4 est solidaire d'un levier 6 du troisième genre articulé à une extrémité autour d'un axe 7 et portant à son autre extrémité l'organe d'obturation 5 constitué par un pointeau.

Des moyens de tarage constitués par un ressort taré 18 sont situés entre le boîtier et le levier 6.

Le ressort 18 est prévu avec une force quasiégale au poids de l'ensemble levier 6, flotteur 4, pointeau 5, mais légèrement inférieure.

Lorsque le clapet est horizontal ou peu incliné le ressort 18 équilibre ainsi le poids du levier mais dès que l'inclinaison dépasse une valeur prédéterminée, la force exercée par le ressort 18 devient plus grande que la résultante du poids qui lui est proposé, le pointeau 5 est alors poussé en position de fermeture de la sortie 3.

Des chicanes 10 divisent l'intérieur du boîtier en deux chambres 11 et 12, la chambre 11 contenant le flotteur 4 et la chambre 12 le pointeau 5.

Ces chicanes permettent au flotteur 4 de réagir lors d'une arrivée brutale de liquide et d'assurer la fermeture du pointeau 5 avant que le liquide n'atteigne la chambre 12.

Le flotteur 4 a une forme annulaire laissant un très large passage pour les gaz, ce qui permet les débits élevés nécessaires.

Dans les variantes des figures 2 à 4, le levier 6 utilisé est du deuxième genre. Il est articulé à l'une de ses extrémités autour d'un axe 7, porte à son autre extrémité le flotteur 4 et en un point médian le pointeau 5.

Comme visible sur les figures 2 à 4, le boîtier comporte une première partie globalement cylindrique dans laquelle est positionné le flotteur 4 et d'une deuxième partie globalement parallélépipédique dans laquelle s'étend le levier 6.

Cette partie parallélépipédique est cloisonnée par une ou plusieurs chicanes 10, s'étendant longitudinalement, en deux chambres: une chambre 11 en liaison directe avec la partie cylindrique du boîtier, et une chambre 12.

Le levier 6 présente une branche dans la chambre 11 qui porte le flotteur 4 et une seconde branche s'étendant dans la chambre 12 et portant le pointeau 5.

La chambre 11 présente, dans la partie cylindrique du boîtier, une paroi supérieure bombée afin de produire une contre-pression sur le flotteur capable de retarder, selon les besoins, son déplacement et donc la fermeture du pointeau 5.

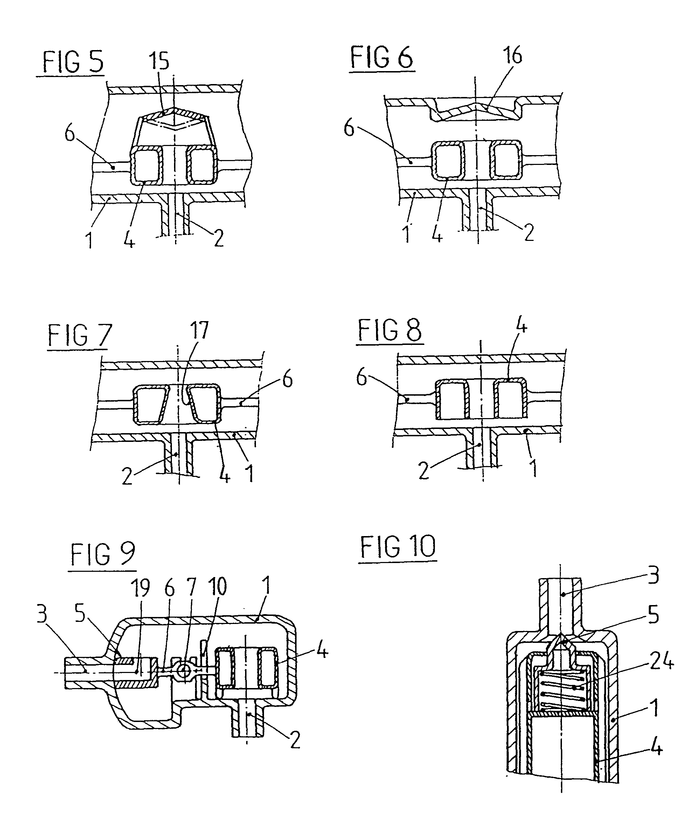

Dans les figures 5 à 8, on prévoit l'utilisation d'un déflecteur afin d'assurer un entraînement du flotteur lors d'une arrivée brutale de liquide.

Aux figures 5 et 6, le déflecteur 15, 16 est globalement conique et est situé au-dessus du flotteur 4; il peut soit être lié audit flotteur, soit être ménagé dans la paroi du boîtier.

A la figure 7, le déflecteur est réalisé par un orifice central tronconique 17 du flotteur tandis qu'à la figure 8, on ménage un espace annulaire ouvert à sa partie inférieure dans le flotteur.

Dans la forme de réalisation de la figure 9, la sortie 3 est horizontale.

Le levier 6 est ici du premier genre, il porte à l'une de ses extrémités un tiroir 19 formant l'organe d'obturation 5.

La variante de la figure 10 est analogue à celle de la figure 1 avec un flotteur 4 coulissant et portant un pointeau 5 s'appuyant sur un ressort taré 24.

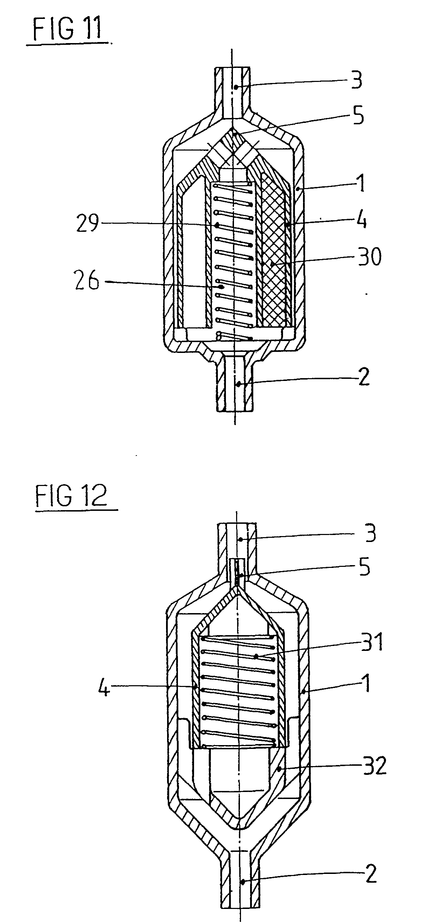

Dans la forme d'exécution de la figure 11, le flotteur 4 est coulissant et comporte un passage axial 26 pour les fluides qui débouche périphériquement au sommet du flotteur 4, dont l'extrémité supérieure forme le pointeau 5.

Cette circulation des gaz crée une contrepression qui améliore le débit gazeux en retardant l'obturation.

Dans cette forme de réalisation, le flotteur 4 s'appuie sur un ressort taré 29, le flotteur 4 pouvant être empli d'un matériau léger 30 qui améliore la flottabilité.

Dans la figure 12, l'écoulement se fait autour du flotteur 4 qui porte le pointeau 5 et s'appuie par l'intermédiaire d'un ressort taré 31 sur un déflecteur 32 qui favorise l'écoulement.

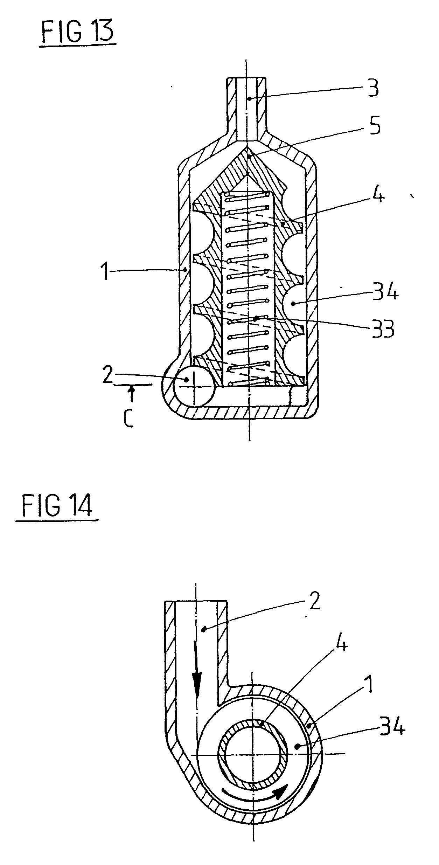

Aux figures 13 et 14, le flotteur 4 est rappelé par un ressort taré 33. L'écoulement se fait extérieurement hélicoïdalement grâce à un chemin hélicoïdal 34 formé dans le flotteur 4.

Ce chemin hélicoïdal pourrait être aménagé à l'intérieur du boîtier 1.

Cette circulation atténue l'effet d'entraînement du flotteur 4 et permet des débits gazeux plus importants.

En présence de liquide, la réaction du flotteur se produit avant que le liquide n'atteigne la sortie du clapet.

## Revendications

1. Clapet de sécurité pour circuit de ventilation d'un réservoir de carburant pour véhicules automobiles comportant un boîtier (1) ayant une entrée (2), une sortie (3), un organe d'obturation (5) apte à fermer ladite sortie (3) et un flotteur (4), caractérisé en ce qu'il comporte des moyens élastiques de tarage (18, 24, 29, 31, 33) aptes à commander ledit organe d'obturation (5) dans le sens de l'obturation de la sortie (3) pour une inclinaison du boîtier (1) supérieure à une valeur prédéterminée.

2. Clapet de sécurité selon la revendication 1, caractérisé en ce que ledit flotteur commande l'organe d'obturation dans le sens de l'obturation de la sortie (3) sous l'effet d'une arrivée de liquide dans le boîtier (1).

3. Clapet de sécurité selon l'une des revendications 1 ou 2, caractérisé en ce que le flotteur (4) et l'organe d'obturation (5) sont solidaires d'un levier (6).

4. Clapet de sécurité selon l'une des revendications 1 ou 2, caractérisé en ce que le flotteur (4) est coulissant.

5. Clapet de sécurité selon l'une des revendications 1 et 4, caractérisé en ce que l'organe d'obturation (5) est porté par le flotteur (4).

6. Clapet de sécurité selon l'une des revendications 1 à 5, caractérisé en ce que lesdits moyens élastiques de tarage comprennent un ressort taré (18, 24, 29, 31, 33).

7. Clapet de sécurité selon l'une des revendications 1 à 6, caractérisé en ce que le flotteur (4) comporte un orifice central (17, 26) de passage d'air.

8. Clapet de sécurité selon l'une des revendications 1 à 7, caractérisé en ce qu'un déflecteur (15, 16, 17, 32) est associé au flotteur (4).

9. Clapet de sécurité selon l'une des revendications 1 à 8, caractérisé en ce que le flotteur (4) et l'organe d'obturation (5) sont logés dans deux chambres (11, 12) du boîtier (1) séparées par des chicanes (10).

## Patentansprüche

1. Sicherheitsventil für den Entlüftungskreislauf eines Kraftfahrzeug-Kraftstoffbehälters, bestehend aus einem Gehäuse (1) mit einem Eintritt (2), einem Austritt (3), einem Verschlußorgan (5), welches zum Verschließen des genannten Austritts (3) geeignet ist, und einem Schwimmer (4), dadurch gekennzeichnet, daß es elastische Verstellmittel (18, 24, 29, 31, 33) aufweist, die geeignet sind, das genannte Verschlußorgan (5) in Verschlußrichtung des Austritts (3) für eine Neigung des Gehäuses (1), die über einen festgelegten Wert hinausgeht, zu betätigen.

2. Sicherheitsventil nach Anspruch 1, dadurch gekennzeichnet, daß der genannte Schwimmer das Verschlußorgan unter der Wirkung einer in das Gehäuse (1) eintretenden Flüssigkeit in Verschlußrichtung des Austritts (3) betätigt.

3. Sicherheitsventil nach einem der Ansprüche 1 oder 2, dadurch gekennzeichnet, daß der Schwimmer (4) und das Verschlußorgan (5) fest mit einem Hebel (6) verbunden sind.

4. Sicherheitsventil nach einem der Ansprüche 1 oder 2, dadurch gekennzeichnet, daß der Schwimmer (4) verschiebbar ist.

5. Sicherheitsventil nach einem der Ansprüche 1 und 4, dadurch gekennzeichnet, daß das Verschlußorgan (5) auf dem Schwimmer (4) aufliegt.

6. Sicherheitsventil nach einem der Ansprüche 1 bis 5, dadurch gekennzeichnet, daß die genannten elastischen Verstellmittel eine geeichte Feder (18, 24, 29, 31, 33) enthalten.

7. Sicherheitsventil nach einem der Ansprüche 1 bis 6, dadurch gekennzeichnet, daß der Schwimmer (4) eine mittlere Luftdurchtrittsöffnung (17, 26) aufweist.

8. Sicherheitsventil nach einem der Ansprüche 1 bis 7, dadurch gekennzeichnet, daß mit dem Schwimmer (4) eine Ablenkplatte (15, 16, 17, 32) verbunden ist.

9. Sicherheitsventil nach einem der Ansprüche 1 bis 8, dadurch gekennzeichnet, daß der Schwimmer (4) und das Verschlußorgan (5) in zwei durch Bleche (10) voneinander getrennten Kammern (11, 12) des Gehäuses (1) untergebracht sind.

**Claims**

1. A safety valve for the ventilation circuit of a fuel tank for automotive vehicles, comprising a housing (1) having an inlet (2), an outlet (3), an obturating member (5) adapted to close the said outlet (3), and a float (4), characterised in that it includes resilient biassing means (18, 24, 29, 31, 33), adapted to urge the said obturating member (5) in the direction of obturation of the outlet (3) at an inclination of the housing (1) that is greater than a predetermined value.

2. A safety valve according to Claim 1, characterised in that the said float urges the obturating member in the direction of obturation of the outlet (3) in response to ingress of liquid into the housing (1).

3. A safety valve according to Claim 1 or Claim 2, characterised in that the float (4) and the obturating member (5) are fixed to a lever (6).

4. A safety valve according to Claim 1 or Claim 2, characterised in that the float (4) is arranged for sliding movement.

5. A safety valve according to Claim 1 or Claim 4, characterised in that the obturating member (5) is carried by the float (4).

6. A safety valve according to one of Claims 1 to 5, characterised in that the said resilient biassing means comprise a calibrated spring (18, 24, 29, 31, 33).

7. A safety valve according to one of Claims 1 to 6, characterised in that the float (4) has a central orifice (17, 26) for the passage of air.

8. A safety valve according to one of Claims 1 to 7, characterised in that a deflector (15, 16, 17, 32) is associated with the float (4).

9. A safety valve according to one of Claims 1 to 8, characterised in that the float (4) and the obturating member (5) are housed in two chambers (11, 12) of the housing (1) which are separated by chicanes (10).

FIG 1

FIG 2

FIG 3

FIG 4

FIG 5

FIG 6

FIG 7

FIG 8

FIG 9

FIG 10

FIG 11

3

5

1

29

4

26

30

2

FIG 12

3

5

31

4

1

32

2

FIG 13

FIG 14